(19) Europäisches Patentamt
European Patent Office
Office européen des brevets

(11) EP 4 489 171 A1

(12) EUROPEAN PATENT APPLICATION
published in accordance with Art. 153(4) EPC

(43) Date of publication:
**08.01.2025 Bulletin 2025/02**

(21) Application number: **23879155.2**

(22) Date of filing: **18.10.2023**

(51) International Patent Classification (IPC):
***H01M 10/0569*** *(2010.01)* ***H01M 50/463*** *(2021.01)*
***H01M 10/0525*** *(2010.01)*

(52) Cooperative Patent Classification (CPC):
**H01M 10/0525; H01M 10/0569; H01M 50/463;**
Y02E 60/10

(86) International application number:
**PCT/CN2023/125290**

(87) International publication number:
**WO 2024/083167 (25.04.2024 Gazette 2024/17)**

(84) Designated Contracting States:
**AL AT BE BG CH CY CZ DE DK EE ES FI FR GB GR HR HU IE IS IT LI LT LU LV MC ME MK MT NL NO PL PT RO RS SE SI SK SM TR**
Designated Extension States:
**BA**
Designated Validation States:
**KH MA MD TN**

(30) Priority: **18.10.2022 CN 202211275783**

(71) Applicant: **Zhuhai Cosmx Power Battery Co., Ltd.**
**Zhuhai, Guangdong 519180 (CN)**

(72) Inventors:
- **LI, Yuju**
  **Zhuhai, Guangdong 519180 (CN)**
- **ZHU, Hui**
  **Zhuhai, Guangdong 519180 (CN)**

(74) Representative: **Murgitroyd & Company**
**Murgitroyd House**
**165-169 Scotland Street**
**Glasgow G5 8PL (GB)**

# (54) BATTERY

(57) Disclosed is a battery with fast charging performance and high safety performance. According to the present disclosure, an overhang of a separator and a content of a carbonate solvent in an electrolyte solution are optimized, thereby reducing a shrinkage of the separator in a high-temperature environment. In addition, a compound shown in Formula 1 is added to the electrolyte solution, so that a dense and stable interface film may be formed at a negative electrode, heat may also be absorbed when an internal temperature of the battery is relatively high, so as to reduce a temperature of a system and a risk of thermal runaway, thereby improving fast charging performance and safety performance of the battery.

EP 4 489 171 A1

## Description

### TECHNICAL FIELD

The present disclosure relates to the field of lithium battery technologies, and specifically relates to a battery with fast charging performance and high safety performance.

### BACKGROUND

As people pay attention to depletion of non-renewable energy sources and environmental pollution, renewable and clean energy sources are developing rapidly. Lithium-ion batteries have features such as high energy density, long cycle life, low self-discharge rate, and environmental friendliness, and currently have been widely used in consumer electronic products, new energy-powered vehicles, and other power battery products.

However, compared with gasoline vehicles, new energy electric vehicles have problems such as long charging time and safety hazards, which limit a range and a quantity of users. Therefore, a demand for fast charging is becoming more and more urgent.

### SUMMARY

It is found through research that improving a conductivity of an electrolyte solution is conducive to improving fast charging capability of a battery, and the most commonly used method for improving a conductivity of an electrolyte solution is to use a carbonate solvent. However, carbonate solvents generally have a relatively low boiling point and poor performance at a high temperature, and usage of carbonate solvents will affect a shrinkage rate of a separator while improving a conductivity of an electrolyte solution. When a temperature of surface of a battery rises in a short period of time due to a large rate of charging/discharging, overcharging/discharging, a high temperature, or the like, shrinkage of a separator inside the battery may be aggravated, thereby causing contact of a positive electrode plate and a negative electrode plate, and resulting in a short-circuit that will continue to generate heat. In this case, a sharp increase of an internal temperature results in thermal runaway, thus causing a safety accident.

To solve safety problems, such as thermal runaway, caused by shrinkage of a separator for a battery with a fast charging capability, the present disclosure provides a battery. According to the present disclosure, an overhang of a separator and a content of a carbonate solvent in an electrolyte solution are optimized, to ensure that the electrolyte solution has a high electrical conductivity, and an effect of the carbonate solvent on a shrinkage rate of the separator in a high-temperature environment is also reduced.

The present disclosure is intended to be implemented by using the following technical solutions:

a battery, where the battery includes a positive electrode plate, a negative electrode plate, a separator, and an electrolyte solution; the electrolyte solution includes a lithium salt, an organic solvent, and an additive, and the organic solvent includes at least one carbonate solvent; and

the battery satisfies following condition:

$$1.5 \leq A/B \leq 12,$$

where A denotes an overhang of the separator, in a unit of mm; and B denotes a mass percentage of the carbonate solvent in the organic solvent.

According to an implementation of the present disclosure, the overhang of the separator refers to a length by which a one-side edge of the separator hangs over a one-side edge of the negative electrode plate in a length direction.

According to an implementation of the present disclosure, A/B is 1.5, 2, 3, 4, 5, 6, 7, 8, 9, 10, 11, 12, or a point value in a range formed by any two of the foregoing values.

In the foregoing condition (that is, $1.5 \leq A/B \leq 12$) of the present disclosure, only numerical parts of parameters are used for operation, and unit parts of the parameters are not used for the operation. For example, in Example 1 of the present disclosure, A is 2 mm, B is 0.2, and thus A/B is 10.

When A/B < 1.5, a ratio of the overhang of the separator to a mass percentage of the carbonate solvent in the organic solvent is relatively small (the overhang of the separator is relatively small or the mass percentage of the carbonate solvent in the organic solvent is relatively high), which seriously deteriorates a hot box pass rate of the battery. This is because less overhang of the separator causes seriously shrinkage of the separator when the separator is heated, causing

contact of a positive electrode plate and a negative electrode plate and resulting in a short-circuit that will continue to generate heat. In this case, a sharp increase of an internal temperature will result in thermal runaway. In addition, an increase of the mass percentage of the carbonate solvent in the organic solvent improves a shrinkage rate of a separator and also significantly improves kinetics of lithium ion in an electrolyte solution, and a fast charging capability of a lithium ion battery is continuously improved. However, an internal reaction is aggravated, and high-temperature performance deteriorates, and finally a hot box pass rate decreases significantly. When $A/B > 12$, the mass percentage of the carbonate solvent in the organic solvent is relatively small, and a higher conductivity cannot be ensured. Therefore, it is controlled that $1.5 \leq A/B \leq 12$.

According to an implementation of the present disclosure, $1 \leq A \leq 2$, for example, A is 1, 1.1, 1.2, 1.3, 1.4, 1.5, 1.6, 1.7, 1.8, 1.9, or 2. When $1 \leq A \leq 2$, it avoids that a hot box pass rate is reduced due to serious shrinkage of the separator caused by too small overhang, and also avoids increase of a process difficulty of the separator and loss of battery energy density due to too large overhang of the separator.

According to an implementation of the present disclosure, $0.2 \leq B \leq 0.8$, for example, B is 0.2, 0.25, 0.3, 0.35, 0.4, 0.45, 0.5, 0.55, 0.6, 0.65, 0.7, 0.75, or 0.8. When $0.2 \leq B \leq 0.8$, the fast charging capability can be ensured without reducing the hot box pass rate of the battery. In this range, as the mass percentage of the carbonate solvent in the organic solvent is increased, an impact on the hot box pass rate can be reduced by using methods such as increasing the overhang of the separator and adding an additive.

According to an implementation of the present disclosure, a positive electrode active material in the positive electrode plate is at least one of lithium manganate oxide, lithium iron phosphate, a lithium-nickel-cobalt-manganese ternary material, lithium nickel manganese oxide, or lithium-rich manganese-based material.

According to an implementation of the present disclosure, a negative active material in the negative electrode plate is at least one of artificial graphite, natural graphite, hard carbon, soft carbon, mesocarbon microbead, a silicon-based negative electrode material, or a lithium-containing metal composite oxide material.

According to an implementation of the present disclosure, the lithium salt is selected from at least one of lithium hexafluorophosphate ($LiPF_6$), lithium difluorophosphate, lithium tetrafluoroborate, lithium hexafluorarsenate(V), lithium perchlorate, lithium bis(fluorosulfonyl)imide, lithium bis(trifluoromethanesulphonyl)imide, lithium bisoxalate borate, or lithium difluorooxalate borate.

According to an implementation of the present disclosure, a percentage of a mass of the lithium salt in a total mass of the electrolyte solution ranges from 12 wt% to 18 wt%, for example, is 12 wt%, 13 wt%, 14 wt%, 15 wt%, 16 wt%, 17 wt%, 18 wt%, or a point value in a range formed by any two of the foregoing values.

According to an implementation of the present disclosure, the carbonate solvent is selected from at least one of methyl formate, ethyl formate, propyl formate, butyl formate, methyl acetate, ethyl acetate, propyl acetate, butyl acetate, methyl propionate, ethyl propionate (EP), propyl propionate (PP), butyl propionate, methyl butyrate, ethyl butyrate, propyl butyrate, or butyl butyrate.

According to an implementation of the present disclosure, the organic solvent further includes at least one of following compounds: propylene carbonate, ethyl methyl carbonate, ethylene carbonate (EC), dimethyl carbonate (DMC), diethyl carbonate, $\gamma$-butyrolactone, or sulfolane.

According to an implementation of the present disclosure, a percentage of a mass of the organic solvent in a total mass of the electrolyte solution ranges from 10 wt% to 80 wt%, for example, is 10 wt%, 20 wt%, 30 wt%, 40 wt%, 50 wt%, 60 wt%, 70 wt%, 80 wt%, or a point value in a range formed by any two of the foregoing values.

According to an implementation of the present disclosure, the additive includes a first additive, and the first additive is selected from at least one of vinylene carbonate (VC), fluoroethylene carbonate (FEC), vinyl ethylene carbonate (VEC), ethylene sulfate (DTD), 1,3-propane sultone (PS), ethylene sulphite (ES), tris(trimethylsilyl) borate (TMSB), or tris(trimethylsilyl) phosphate (TMSP).

According to an implementation of the present disclosure, the additive further includes a second additive, and the second additive is selected from at least one of the compounds shown in Formula 1:

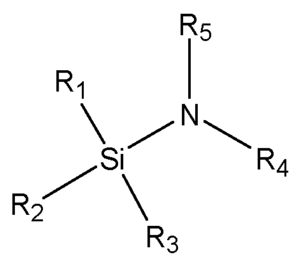

Formula 1,

where $R_1$, $R_2$, $R_3$, $R_4$, and $R_5$ are the same or different from each other, and are independently selected from hydrogen, halogen, an aldehyde group, a substituted or unsubstituted alkyl group, a substituted or unsubstituted alkenyl group, or a substituted or unsubstituted alkynyl group. If there is a substitution, a substituent is at least one of halogen, an alkyl group or an aldehyde group.

According to an implementation of the present disclosure, $R_1$, $R_2$, $R_3$, $R_4$, and $R_5$ are the same or different from each other, and are independently selected from hydrogen, halogen, an aldehyde group, a substituted or unsubstituted $C_{1-6}$ alkyl group, a substituted or unsubstituted $C_{2-6}$ alkenyl group, or a substituted or unsubstituted $C_{2-6}$ alkynyl group. If there is a substitution, a substituent is at least one of halogen, a $C_{1-6}$ alkyl group, or an aldehyde group.

According to an implementation of the present disclosure, $R_1$, $R_2$, $R_3$, $R_4$, and $R_5$ are the same or different from each other, and are independently selected from hydrogen, halogen, an aldehyde group, a substituted or unsubstituted $C_{1-3}$ alkyl group, a substituted or unsubstituted $C_{2-3}$ alkenyl group, or a substituted or unsubstituted $C_{2-}3$ alkynyl group. If there is a substitution, a substituent is at least one of halogen, a $C_{1-3}$ alkyl group, or an aldehyde group.

According to an implementation of the present disclosure, $R_1$, $R_2$, $R_3$, $R_4$ and $R_5$ are the same or different from each other, and are independently selected from hydrogen, fluorine, - C(=O)H, a substituted or unsubstituted $C_{1-3}$ alkyl group, a substituted or unsubstituted $C_{2-3}$ alkenyl group, or a substituted or unsubstituted $C_{2-3}$ alkynyl group. If there is a substitution, a substituent is at least one of fluorine, $C_{1-3}$ alkyl group, or -C(=O)H.

According to an implementation of the present disclosure, a compound of Formula 1 is selected from at least one of following compound I to compound IV:

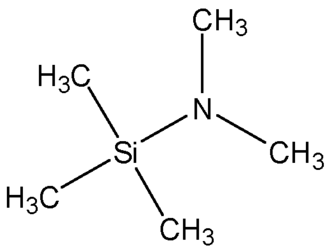

compound I

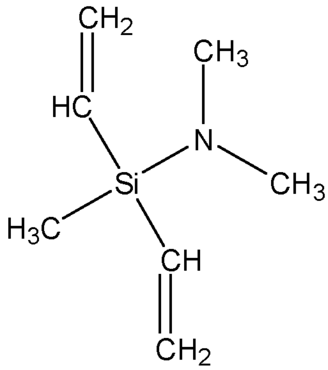

compound II

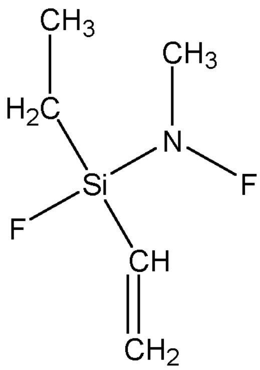

compound III

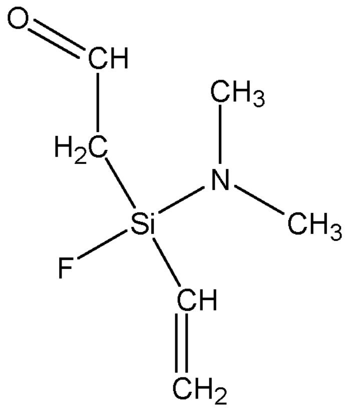

compound IV.

According to an implementation of the present disclosure, a percentage of a mass of the first additive in a total mass of the electrolyte solution ranges from 0.5 wt% to 4 wt%, for example, is 0.5 wt%, 0.6 wt%, 0.7 wt%, 0.8 wt%, 0.9 wt%, 1 wt%, 1.2 wt%, 1.5 wt%, 1.8 wt% 2wt%, 2.2 wt%, 2.5 wt%, 2.8 wt%, 3 wt%, 3.2 wt%, 3.5 wt%, 3.6 wt%, 3.8 wt%, 4 wt%, or a point value in a range formed by any two of the foregoing values.

According to an implementation of the present disclosure, a percentage of a mass of the second additive in a total mass of the electrolyte solution ranges from 0.5 wt% to 3 wt%, for example, is 0.5 wt%, 0.6 wt%, 0.7 wt%, 0.8 wt%, 0.9 wt%, 1 wt%, 1.2 wt%, 1.5 wt%, 1.8 wt%, 2 wt%, 2.2 wt%, 2.5 wt%, 2.8 wt%, 3 wt%, or a point value in a range formed by any two of the foregoing values.

According to an implementation of the present disclosure, the first additive and the second additive may be obtained through preparation in a method known in the art, or may be obtained through commercial purchase.

According to an implementation of the present disclosure, a charging cut-off voltage of the battery is 4.45 V or above.

According to an implementation of the present disclosure, the battery is a lithium-ion battery.

Beneficial effects of the present disclosure are as follows:

The present disclosure provides a battery, in particular a battery with fast charging performance and high safety performance. According to the present disclosure, an overhang of a separator and a content of a carbonate solvent in an electrolyte solution are optimized, thereby reducing a shrinkage of the separator in a high-temperature environment. In addition, a compound shown in Formula 1 is added to the electrolyte solution, so that a dense and stable interface film may be formed at a negative electrode, heat may also be absorbed when an internal temperature of the battery is relatively high, so as to reduce a temperature of a battery system and a risk of thermal runaway, thereby improving fast charging performance and safety performance of the battery.

## DETAILED DESCRIPTION OF THE EMBODIMENTS

The following further describes the present disclosure in detail with reference to specific embodiments. It should be understood that the following embodiments are merely for the purposes of illustrating and explaining the present disclosure, and should not be construed as limiting the protection scope of the present disclosure. Any technology implemented based on the foregoing contents of the present disclosure falls within the protection scope of the present disclosure.

The experimental method used in the following examples is a conventional method unless otherwise specified. The reagent, the material, and the like used in the following examples may be obtained from a commercial channel without special description.

In the description of the present disclosure, it should be noted that the terms "first", "second", or the like, are only used for descriptive purposes, and do not indicate or imply relative importance.

Preparation of a lithium-ion battery

(1) Preparation of a positive electrode plate

A positive electrode active material lithium nickel cobalt manganese oxide (NCM622), a binder polyvinylidene fluoride (PVDF), and a conductive agent acetylene black were mixed at a weight ratio of 96.5:2:1.5, added with N-methylpyrrolidone (NMP). The mixture was stirred under action of a vacuum mixer until a mixed system became a positive electrode slurry with uniform fluidity. The positive electrode slurry was evenly applied on aluminum foil having a thickness of 7 μm. The coated aluminum foil was baked in a five-stage oven with different temperatures and then dried in an oven at 120°C for 8 hours, followed by rolling and cutting, to obtain the positive electrode plate.

(2) Preparation of a negative electrode plate

A negative electrode active material artificial graphite, a thickener sodium carboxymethyl cellulose (CMC-Na), a binder styrene-butadiene rubber, a conductive agent acetylene black, and a conductive agent single-walled carbon nanotube (SWCNT) were mixed at a weight ratio of 95.9:1:2:1:0.1, added into deionized water. The mixture was stirred under action of a vacuum mixer to obtain a negative electrode slurry. The negative electrode slurry was evenly applied on copper foil having a thickness of 6 μm, and then drying (temperature: 85°C, time: 5 hours), rolling and die cutting were carried out to obtain the negative electrode plate.

(3) Preparation of an electrolyte solution

In an argon-filled glove box (moisture < 10 ppm, oxygen < 1 ppm), EC, DMC, EP, and PP were evenly mixed, where a sum of masses of EP and PP is a percentage B of a mass of a carbonate solvent in an electrolyte solution in a mass of an organic solvent in the electrolyte solution. Then 14 wt% $LiPF_6$ and a specific content of an additive were rapidly added to the mixed solution, and the mixture was stirred evenly to obtain the electrolyte solution.

(4) Preparation of a separator

A polyethylene separator with a thickness of 9 μm is selected, and a one-side edge of the separator hangs over a one-side edge of the negative electrode plate by a specific length, namely, an overhang of the separator.

(5) Preparation of a lithium-ion battery

The foregoing prepared positive electrode plate, separator, and negative electrode plate were wound to obtain an unfilled bare cell. The bare cell was placed in an outer packaging foil, the prepared electrolyte solution was injected into the dried bare cell, and after processes such as vacuum packaging, standing, forming, shaping, and sorting, the lithium-ion battery required was obtained.

Methods for testing performance of lithium-ion batteries prepared in Examples and Comparative Examples are as follows.

(1) Test for conductivity: A conductivity of an electrolyte solution prepared at 25°C was tested by using a conductivity meter and a platinum black electrode DSJ-1C.

(2) Hot box test: A prepared lithium-ion battery was charged to an upper limit voltage 4.45 V, and then placed in a 135°C thermostat for 120 minutes, to observe whether the battery catches fire or explodes.

(3) Temperature rise test during charging: A prepared lithium-ion battery was placed in a 25°C thermostat, and charged at a rate of 5C, to detect a degree of temperature rise of a surface of the battery when the battery is charged at 5C relative to being not charged, that is, the degree of temperature rise of the battery is equal to a temperature of the surface of the battery charged at 5C minus a temperature of the surface of the battery that is not charged.

Comparative examples 1 and 2 and Examples 1-6

The additives in Comparative examples 1 and 2 and Examples 1-6 are vinylene carbonate accounting for 1 wt% of a total mass of an electrolyte solution, fluoroethylene carbonate accounting for 1 wt% of a total mass of an electrolyte solution, ethylene sulfate accounting for 2 wt% of a total mass of an electrolyte solution, and 1,3-propane sultone accounting for 2 wt% of a total mass of an electrolyte solution.

Table 1 Performance test results and composition of batteries in Comparative examples 1 and 2 and Examples 1-6

| | A/B | A (mm) | B | Hot box pass rate | Conductivity ms/cm | Battery temperature rise (°C) |
|---|---|---|---|---|---|---|
| Comparative Example 1 | 1.25 | 0.5 | 0.4 | 0/10 pass | 8.7 | 63 |
| Comparative Example 2 | 20 | 2 | 0.1 | 10/10 pass | 6.1 | 53 |
| Example 1 | 10 | 2 | 0.2 | 10/10 pass | 7.2 | 59 |
| Example 2 | 5 | 2 | 0.4 | 10/10 pass | 8.5 | 62 |
| Example 3 | 3.3 | 2 | 0.6 | 6/10 pass | 8.8 | 75 |
| Example 4 | 2.5 | 2 | 0.8 | 3/10 pass | 9.4 | 80 |
| Example 5 | 3.75 | 1.5 | 0.4 | 10/10 pass | 8.2 | 63 |
| Example 6 | 2.5 | 1 | 0.4 | 10/10 pass | 8.4 | 62 |

It may be learned from Comparative Example 2 and Examples 1-4 that, with an increase in a content of the low-boiling carbonate solvent, the hot box pass rate of the batteries significantly decreases. This is because that the increase in a content of a low-boiling carbonate solvent improves a shrinkage rate of a separator and also significantly improves kinetics of lithium ion in an electrolyte solution, and a fast charging capability of a lithium ion battery is continuously improved. However, an internal reaction is aggravated, and high-temperature performance deteriorates, and finally a hot box pass rate decreases significantly. For example, in Example 4, the hot box pass rate is only 30%.

It may be learned from Comparative Example 1, Example 2, and Examples 5 and 6 that, with a decrease in a ratio of the overhang of the separator to a content of the carbonate solvent decreases (the overhang of the separator decreases), the heat box pass rate decreases. This is because that at a high temperature, usage of the carbonate solvent significantly improves a shrinkage rate of the separator, thus deteriorating heat box performance. Therefore, it is ensured that $1.5 \leq A/B \leq 12$.

Examples 7-18

The additives in Examples 7-18 are vinylene carbonate accounting for 1 wt% of a total mass of an electrolyte

solution, fluoroethylene carbonate accounting for 1 wt% of a total mass of an electrolyte solution, ethylene sulfate accounting for 2 wt% of a total mass of an electrolyte solution, 1,3-propane sultone accounting for 2 wt% of a total mass of an electrolyte solution, and a compound showing in Formula 1.

Table 2 Performance test results and composition of batteries in Examples 7-18

| | A/B | A (mm) | B | Type and content of a second additive (wt%) | Hot box pass rate | Battery temperature rise (°C) |
|---|---|---|---|---|---|---|
| Example 7 | 3.3 | 2 | 0.6 | Compound I: 0.3 | 6/10 pass | 64 |
| Example 8 | 3.3 | 2 | 0.6 | Compound I: 3.5 | 8/10 pass | 76 |
| Example 9 | 3.3 | 2 | 0.6 | Compound I: 0.5 | 8/10 pass | 55 |
| Example 10 | 3.3 | 2 | 0.6 | Compound I: 1 | 9/10 pass | 42 |
| Example 11 | 3.3 | 2 | 0.6 | Compound I: 2 | 9/10 pass | 36 |
| Example 12 | 3.3 | 2 | 0.6 | Compound I: 3 | 7/10 pass | 60 |
| Example 13 | 3.3 | 2 | 0.6 | Compound II: 1 | 9/10 pass | 41 |
| Example 14 | 3.3 | 2 | 0.6 | Compound III: 1 | 9/10 pass | 43 |
| Example 15 | 3.3 | 2 | 0.6 | Compound IV: 1 | 9/10 pass | 44 |
| Example 16 | 3.3 | 2 | 0.6 | Compound I: 0.5 + Compound II: 0.5 | 9/10 pass | 41 |
| Example 17 | 3.3 | 2 | 0.6 | Compound I: 0.5 + Compound III: 0.5 | 10/10 pass | 39 |
| Example 18 | 3.3 | 2 | 0.6 | Compound III: 0.5 + Compound IV: 0.5 | 10/10 pass | 37 |

It may be learned from Example 3 and Example 7 that, when the content of the compound shown in Formula 1 is less than 0.5 wt%, heat absorbed is limited, the temperature rise of surface of the battery is relatively high, the internal temperature of the battery cannot be effectively reduced, and a hot box pass rate is not significantly improved. It may be learned from Example 3 and Example 8 that, when the content of the compound shown in Formula 1 is greater than 3wt %, although a reaction can occur to absorb heat, internal impedance may also be increased, which results in a large increase in a temperature rise of the battery surface, and an internal temperature of the battery cannot be significantly reduced. It may be learned from Examples 9 to 18 that, when the content of the compound shown in Formula 1 ranges from 0.5 wt% to 3 wt%, a reaction can occur, internal heat is absorbed, a hot box pass rate is significantly improved, and temperature rise of the battery is relatively low, which indicates that the battery has better fast charging performance.

The implementations of the present disclosure are described above. However, the present disclosure is not limited to the foregoing implementations. Any modifications, equivalent replacements, improvements, and the like within the spirit and principle of the present disclosure shall fall within the scope of protection of the present disclosure.

## Claims

**1.** A battery, wherein the battery comprises a positive electrode plate, a negative electrode plate, a separator, and an electrolyte solution; the electrolyte solution comprises a lithium salt, an organic solvent, and an additive, and the organic solvent comprises at least one carbonate solvent; and

the battery satisfies following condition:

$$1.5 \leq A/B \leq 12,$$

wherein A denotes an overhang of the separator, in a unit of mm; B denotes a mass percentage of the carbonate solvent in the organic solvent; and the overhang of the separator means a length by which a one-side edge of the separator hangs over a one-side edge of the negative electrode plate.

**2.** The battery according to claim 1, wherein $1 \leq A \leq 2$.

**3.** The battery according to claim 1 or 2, wherein $0.2 \leq B \leq 0.8$.

4. The battery according to any one of claims 1 to 3, wherein the carbonate solvent is selected form at least one of methyl formate, ethyl formate, propyl formate, butyl formate, methyl acetate, ethyl acetate, propyl acetate, butyl acetate, methyl propionate, ethyl propionate, propyl propionate, butyl propionate, methyl butyrate, ethyl butyrate, propyl butyrate, or butyl butyrate.

5. The battery according to any one of claims 1 to 4, wherein the additive comprises a first additive, and the first additive is selected from at least one of vinylene carbonate, fluoroethylene carbonate, vinyl ethylene carbonate, ethylene sulfate, 1,3-propane sultone, ethylene sulphite, tris(trimethylsilyl) borate, or tris(trimethylsilyl) phosphate.

6. The battery according to any one of claims 1 to 5, wherein the additive further comprises a second additive and the second additive is selected from at least one of compounds in Formula 1:

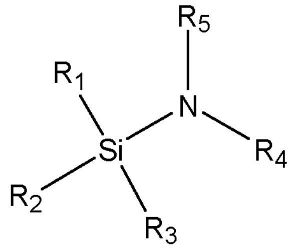

Formula 1,

wherein $R_1$, $R_2$, $R_3$, $R_4$, and $R_5$ are the same or different from each other, and are independently selected from hydrogen, halogen, an aldehyde group, a substituted or unsubstituted alkyl group, a substituted or unsubstituted alkenyl group, or a substituted or unsubstituted alkynyl group; and when there is a substitution, a substituent is at least one of halogen, an alkyl group or an aldehyde group;
preferably, $R_1$, $R_2$, $R_3$, $R_4$, and $R_5$ are the same or different from each other, and are independently selected from hydrogen, halogen, an aldehyde group, a substituted or unsubstituted $C_{1-6}$ alkyl group, a substituted or unsubstituted $C_{2-6}$ alkenyl group, or a substituted or unsubstituted $C_{2-6}$ alkynyl group; and when there is a substitution, a substituent is at least one of halogen, a $C_{1-6}$ alkyl group or an aldehyde group; and
preferably, $R_1$, $R_2$, $R_3$, $R_4$ and $R_5$ are the same or different from each other, and are independently selected from hydrogen, fluorine, -C(=O)H, a substituted or unsubstituted $C_{1-3}$ alkyl group, a substituted or unsubstituted $C_{2-3}$ alkenyl group, or a substituted or unsubstituted $C_{2-3}$ alkynyl group; and when there is a substitution, a substituent is at least one of fluorine, $C_{1-3}$ alkyl group, or -C(=O)H.

7. The battery according to claim 6, wherein a compound of Formula 1 is selected from at least one of following compound I to compound IV:

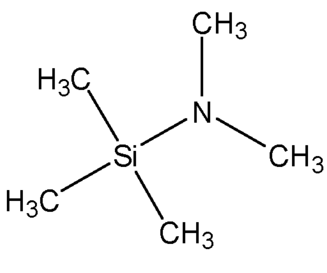

compound I

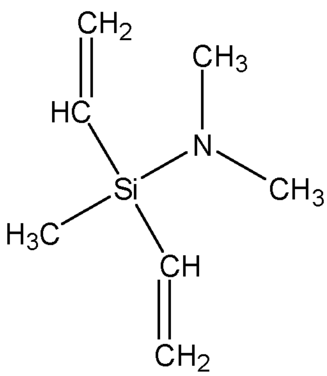

compound II

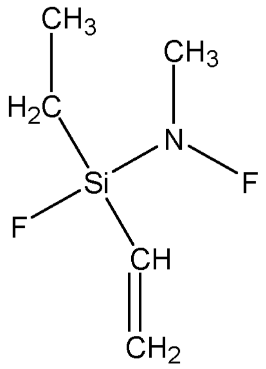
compound III

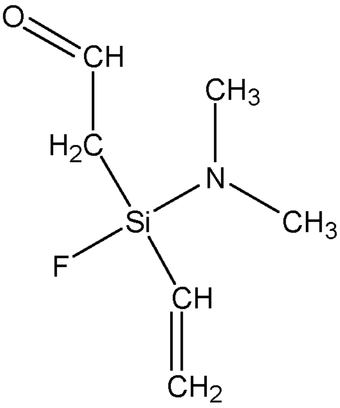
compound IV.

8. The battery according to claim 5, wherein a percentage of a mass of the first additive in a total mass of the electrolyte solution ranges from 0.5 wt% to 4 wt%.

9. The battery according to claim 6 or 7, wherein a percentage of a mass of the second additive in a total mass of the electrolyte solution ranges from 0.5 wt% to 3 wt%.

10. The battery according to any one of claims 1 to 9, wherein a positive electrode active material in the positive electrode plate is at least one of lithium manganate oxide, lithium iron phosphate, a lithium-nickel-cobalt-manganese ternary material, lithium nickel manganese oxide, or lithium-rich manganese-based material.

11. The battery according to any of claims 1 to 10, wherein a negative active material in the negative electrode plate is at least one of artificial graphite, natural graphite, hard carbon, soft carbon, mesocarbon microbead, a silicon-based negative electrode material, or a lithium-containing metal composite oxide material.

12. The battery according to any one of claims 1 to 11, wherein the lithium salt is selected from at least one of lithium hexafluorophosphate, lithium difluorophosphate, lithium tetrafluoroborate, lithium hexafluorarsenate(V), lithium perchlorate, lithium bis(fluorosulfonyl)imide, lithium bis(trifluoromethanesulphonyl)imide, lithium bisoxalate borate, or lithium difluorooxalate borate.

13. The battery according to any one of claims 1 to 12, wherein a percentage of a mass of the lithium salt in a total mass of the electrolyte solution ranges from 12 wt% to 18 wt%.

14. The battery according to any one of claims 1 to 13, wherein the organic solvent further comprises at least one of following compounds: propylene carbonate, ethyl methyl carbonate, ethylene carbonate, dimethyl carbonate, diethyl carbonate, fluoroethylene carbonate, $\gamma$-butyrolactone, or sulfolane; and
preferably, a percentage of a mass of the organic solvent in a total mass of the electrolyte solution ranges from 10 wt% to 80 wt%.

15. The battery according to any one of claims 1 to 14, wherein a charge cut-off voltage of the battery is 4.45 V or higher.

**INTERNATIONAL SEARCH REPORT**

International application No.
**PCT/CN2023/125290**

**A. CLASSIFICATION OF SUBJECT MATTER**

H01M10/0569(2010.01)i; H01M50/463(2021.01)i; H01M10/0525(2010.01)i

According to International Patent Classification (IPC) or to both national classification and IPC

**B. FIELDS SEARCHED**

Minimum documentation searched (classification system followed by classification symbols)

IPC: H01M10/-; H01M50/-

Documentation searched other than minimum documentation to the extent that such documents are included in the fields searched

Electronic data base consulted during the international search (name of data base and, where practicable, search terms used)

CNTXT, ENTXTC, CNKI, ENTXT, ISI_Web of Science: 电池, 羧酸酯, 隔膜, 安全, 快充, overhang, battery, cell, carboxylic ester, reliability, fast charg+, safety

**C. DOCUMENTS CONSIDERED TO BE RELEVANT**

| Category* | Citation of document, with indication, where appropriate, of the relevant passages | Relevant to claim No. |
|---|---|---|
| PX | CN 115911567 A (ZHUHAI COSMX POWER BATTERY CO., LTD.) 04 April 2023 (2023-04-04)<br>entire document | 1-15 |
| X | CN 111786022 A (EVE ENERGY CO., LTD.) 16 October 2020 (2020-10-16)<br>description, paragraphs 7-35, and embodiments 3, 4 and 7, and table 1 | 1-15 |
| X | CN 114530632 A (TSINGHUA UNIVERSITY) 24 May 2022 (2022-05-24)<br>description, paragraphs 4-22, and embodiment 2 | 1-15 |
| X | CN 214956956 U (BEIJING XIAOMI MOBILE SOFTWARE CO., LTD.) 30 November 2021 (2021-11-30)<br>claims 1-9, and description, paragraphs 80-84 | 1-15 |
| X | WO 2021189465 A1 (NINGDE AMPEREX TECHNOLOGY LIMITED) 30 September 2021 (2021-09-30)<br>description, paragraphs 2-17 | 1-15 |
| A | CN 102368565 A (DONGGUAN AMPEREX TECHNOLOGY LIMITED et al.) 07 March 2012 (2012-03-07)<br>entire document | 1-15 |

☑ Further documents are listed in the continuation of Box C. ☑ See patent family annex.

* Special categories of cited documents:
"A" document defining the general state of the art which is not considered to be of particular relevance
"D" document cited by the applicant in the international application
"E" earlier application or patent but published on or after the international filing date
"L" document which may throw doubts on priority claim(s) or which is cited to establish the publication date of another citation or other special reason (as specified)
"O" document referring to an oral disclosure, use, exhibition or other means
"P" document published prior to the international filing date but later than the priority date claimed
"T" later document published after the international filing date or priority date and not in conflict with the application but cited to understand the principle or theory underlying the invention
"X" document of particular relevance; the claimed invention cannot be considered novel or cannot be considered to involve an inventive step when the document is taken alone
"Y" document of particular relevance; the claimed invention cannot be considered to involve an inventive step when the document is combined with one or more other such documents, such combination being obvious to a person skilled in the art
"&" document member of the same patent family

| Date of the actual completion of the international search | Date of mailing of the international search report |
|---|---|
| **25 January 2024** | **31 January 2024** |

| Name and mailing address of the ISA/CN | Authorized officer |
|---|---|
| **China National Intellectual Property Administration (ISA/CN)**<br>**China No. 6, Xitucheng Road, Jimenqiao, Haidian District, Beijing 100088** | Telephone No. |

Form PCT/ISA/210 (second sheet) (July 2022)

INTERNATIONAL SEARCH REPORT

International application No.
PCT/CN2023/125290

C. DOCUMENTS CONSIDERED TO BE RELEVANT

| Category* | Citation of document, with indication, where appropriate, of the relevant passages | Relevant to claim No. |
|---|---|---|
| A | CN 108461693 A (GUANGDONG TEAMGIANT NEW ENERGY TECH STOCK CO., LTD.) 28 August 2018 (2018-08-28) entire document | 1-15 |
| A | KR 20160110090 A (LG CHEMICAL LTD.) 21 September 2016 (2016-09-21) entire document | 1-15 |

Form PCT/ISA/210 (second sheet) (July 2022)

**INTERNATIONAL SEARCH REPORT**
**Information on patent family members**

International application No.
**PCT/CN2023/125290**

| Patent document cited in search report | | | Publication date (day/month/year) | Patent family member(s) | | | Publication date (day/month/year) |
|---|---|---|---|---|---|---|---|
| CN | 115911567 | A | 04 April 2023 | None | | | |
| CN | 111786022 | A | 16 October 2020 | None | | | |
| CN | 114530632 | A | 24 May 2022 | None | | | |
| CN | 214956956 | U | 30 November 2021 | None | | | |
| WO | 2021189465 | A1 | 30 September 2021 | CN | 113826252 | A | 21 December 2021 |
| CN | 102368565 | A | 07 March 2012 | CN | 102368565 | B | 13 April 2016 |
| CN | 108461693 | A | 28 August 2018 | CN | 108461693 | B | 30 August 2022 |
| KR | 20160110090 | A | 21 September 2016 | KR | 101772800 | B1 | 29 August 2017 |

Form PCT/ISA/210 (patent family annex) (July 2022)